(19) Europäisches Patentamt
European Patent Office
Office européen des brevets

(11) Veröffentlichungsnummer: **0 263 265**
**A2**

# (12) EUROPÄISCHE PATENTANMELDUNG

(21) Anmeldenummer: **87111613.3**

(22) Anmeldetag: **11.08.87**

(51) Int. Cl.[4]: **C08K 5/00**, C08K 5/01, C08L 71/04

(30) Priorität: **08.10.86 DE 3634225**

(43) Veröffentlichungstag der Anmeldung: **13.04.88 Patentblatt 88/15**

(84) Benannte Vertragsstaaten: **AT BE DE FR GB IT NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Ribbing, Wilfried, Dr.**
**Hesternweg 20**
**D-4270 Dorsten 12(DE)**
Erfinder: **Bartmann, Martin, Dr.**
**Burgstrasse 35**
**D-4350 Recklinghausen(DE)**

## (54) Verfahren zur Verbesserung der Qualität von PPE-haltigen Formmassen.

(57) Die Erfindung betrifft ein Verfahren zur Herstellung von PPE bzw. PPE-haltigen Formmassen. Zur Verbesserung der Farbqualität setzt man der organischen PPE-Lösung Styrol oder ein Styrolderivat zu.

EP 0 263 265 A2

## Verfahren zur Verbesserung der Qualität von PPE-haltigen Formmassen

Gegenstand der Erfindung ist ein Verfahren zur Verbesserung der Farbqualität von Formmassen, die Polyphenylenether (PPE) enthalten.

Es ist bekannt, daß Polyphenylenether (PPE) gegenüber thermischer Belastung sehr empfindlich sind, was sich - auch in Abwesenheit von Sauerstoff - an der Bildung tief dunkel gefärbter Produkte zeigt. Diese Produkte bilden sich offenbar aus Vorprodukten mit chinoiden Strukturen, die als Nebenprodukte bei der Polykondensation o,o-disubstituierter Phenole anfallen. Verunreinigende Nebenprodukte aller Art beeinflussen naturgemäß in erheblichem Maße die Farbqualität von PPE und PPE-haltigen Formmassen. Dem Problem kommt insbesondere dann Bedeutung zu, wenn man das PPE nicht durch Fällung mit einem sogenannten Antilösemittel isoliert, sondern - was verfahrensmäßig vorteilhafter ist - nach einem sogenannten Direktisolationsverfahren aufarbeitet. Ein solches Verfahren sieht vor, das nach der oxidativen Kupplungsreaktion in Lösung anfallende Polymere von störenden Verunreinigungen (Katalysatorbestandteilen und Nebenprodukten der Reaktion wie Diphenochinon) zu befreien, das Lösemittel auf destillativem Wege größtenteils abzutrennen und das Material - gegebenenfalls unter Zusatz weiterer Polymerbestandteile, Flammschutzmittel und sonstiger Zusatzstoffe - in einem Extruder oder einem ähnlich wirkenden Gerät von restlichen flüchtigen Bestandteilen weitgehend zu befreien.

Die japanische Offenlegungsschrift 70/40551 beschreibt ein Verfahren zur Stabilisierung des PPE gegenüber thermischer Oxidation, bei dem die OH-Endgruppen des PPE in Gegenwart basischer Verbindungen mit Styrolderivaten umgesetzt werden. Dieses Verfahren ist in mehrfacher Hinsicht nachteilig:

-Man benötigt erhebliche Mengen monomeres Styrol. Nach der Behandlung des PPE muß das nicht umgesetzte Styrolderivat zurückgewonnen werden.

-Würde man das PPE nach dem Direktisolationsverfahren weiter behandeln, käme es zu einer Polymerisation des monomeren Styrols. Man erhielte Polymermischungen, die wegen ihres hohen Styrolanteils eine sehr niedrige Wärmeformbeständigkeit aufwiesen.

-Der notwendige Zusatz von Alkaliverbindungen, p-Benzochinon und Piperazin erscheint aufwendig.

Die JP-OS 71/02837 sieht vor, die Endgruppen des PPE in Gegenwart von basischen Verbindungen mit Acrylamiden umzusetzen, um das PPE gegen oxidativen Abbau zu schützen. Trotzdem kommt es auch bei solchen verkappten Polyphenylenethern unter Wärmeeinwirkung zu unbefriedigenden Farbveränderungen. Es ist daher davon auszugehen, daß die beobachteten Reaktionen nicht auf die Endgruppen des PPE beschränkt sind.

Aus der DE-PS 16 94 258 ist der Zusatz von 0,1 bis 6 Gewichtsprozent von organischen Phosphiten als Stabilisatoren für PPE bekannt. Derartige Stabilisatoren bewirken, daß das PPE bei der Weiterverarbeitung von Pulver oder Granulat nicht oxidativ geschädigt wird.

Es wurde vorgeschlagen, den Polymerlösungen Chelatisierungsmittel und weitere Stabilisierungsmittel, wie z. B. zweiwertige Phenole und Reduktionsmittel (vgl. DE-OS 27 54 887 und DE-PS 26 16 746) oder aromatische Amine (vgl. DE-OS 27 55 937), zuzusetzen. Während die Chelatisierungsmittel die nachteiligen Einflüsse von Resten des Metallkatalysators im Produkt aufheben sollen, dienen die Reduktionsmittel dazu, farbige Chinone umzusetzen. Diese Lösungen sind unbefriedigend, da man die Zusatzstoffe in teilweise beträchtlichen Konzentrationen benötigt. Außerdem wird die Isolierung der Polyphenylenether dadurch zusätzlich erschwert. Mit diesen Maßnahmen ist insbesondere keine Farbstabilisierung bei Anwendung höherer Temperaturen erreichbar.

Als weitere Schwierigkeit kommt hinzu, daß PPE allein sowie Mischungen mit Styrolpolymerisaten während der Extrusion und der Spritzgußverarbeitung zu einem Molekulargewichtsaufbau neigen. Dies ist ungünstig, da die Fließeigenschaften des Polymeren dann zurückgehen und bei der Extrusion höhere Temperaturen erforderlich werden (vgl. EP-OS 0 121 974, Seite 1). Um dies zu vermeiden, wird vorgeschlagen, der Polymermischung ein festes, nichtaromatisches Dien oder Dienophil zuzusetzen.

Nach Erkenntnissen, die in der DE-OS 24 30 130 niedergelegt sind, schreitet die oxidative Kupplungsreaktion von monomeren Phenolen auch nach Abstoppung der eigentlichen Reaktion fort, wobei einerseits eine "reißverschlußartige Depolymerisationreaktion" und andererseits eine Vernetzungsreaktion auftritt. Letztere wird dadurch verursacht, daß Wasserstoffatome am Alpha-C-Atom der Seitenkette abgespalten und aktive Methylengruppen gebildet werden. Diese Reaktionen finden auch dann statt, wenn der Katalysator inaktiviert ist. Nach gleichzeitiger Behandlung des PPE mit einem zweiwertigen Phenol oder Benzochinon und einem milden Reduktionsmittel wie z. B. Hydrazin stellt man eine beträchtliche Absenkung des Molekulargewichts fest (vgl. DE-PS 24 30 130). Auf diese Weise gelingt es zwar, nach der oxidativen Kupplungsreaktion ein PPE reproduzierbarer Molmasse zu erhalten. Die Probleme, die bei der Extrusion auftreten, werden hierdurch jedoch nicht gelöst.

Es ist ferner aus der japanischen Auslegeschrift 71/32 427 bekannt, PPE durch Zusatz von Styrol in Gegenwart von Brönstedt-Säuren zu stabilisieren.

Ein anderes Verfahren, das in der japanischen Offenlegungsschrift 73/12 197 beschrieben wird, sieht vor, Styrol in Gegenwart von PPE und eines Radikalinitiators zu polymerisieren. Das Produkt soll besonders widerstandfähig gegenüber Hitze und chemischen Einflüssen sein.

Pfropfcopolymere, die durch Polymerisation von Styrol in Gegenwart von PPE und eines Radikalinitiators hergestellt werden, sollen nach Angaben der japanischen Offenlegungsschrift 72/105 414 eine verbesserte Farbqualität aufweisen. Die beiden zuletzt aufgeführten Verfahren haben den Nachteil, nur bei Mischungen einsetzbar zu sein, die einen hohen Anteil von Polystyrolen enthalten.

Das Verfahren der DE-OS 20 57 107 beschreibt die Pfropfung von Styrol auf PPE bei einer Temperatur von 40 bis 150 °C in Gegenwart eines Peroxids und Wasser.

Ziel der Erfindung ist es, ein Verfahren zur Herstellung von PPE bzw. PPE-haltigen Formmassen zu entwickeln, das folgenden Zielen gerecht werden soll:

-Bei der thermischen Behandlung von PPE und PPE-haltigem Material, das vorzugsweise nach dem Direktisolationsverfahren gewonnen wird, kommt es zu Verfärbungen, die auf einer Reaktion der chinoiden Verbindungen, insbesondere Diphenochinon, in der Wärme beruhen. Diese sollten in eine Form überführt werden, in der sie - auch nach Erwärmung - keinen Anlaß zu Farbverschlechterungen des Produktes liefern. Dieser Effekt, der bereits bei 140 °C und darunter eintreten kann und bei Temperaturen über 200 °C sehr ausgeprägt ist, ist unerwünscht. Nach dem Stand der Technik benötigt man zur Herstellung von PPE und PPE-haltigen Formmassen Temperaturen, die üblicherweise über 240 °C liegen.

-PPE, das nach dem Direktisolationsverfahren hergestellt wird oder aber durch Verarbeitung von Fällpulver hergestellt wird, neigt zu einem Molekulargewichtsaufbau beim erhöhten Temperaturen. Dies macht sich insbesondere bei der Extrusion und beim Spritzguß negativ bemerkbar, da gleichzeitig die Fließeigenschaften zurückgehen. Darüber hinaus werden die mechanischen Eigenschaften, wie z. B. die Kerbschlagzähigkeit, ungünstig beeinflußt.

-In der Praxis ist man daran interessiert, unter gegebenen Voraussetzungen ein PPE-Material möglichst guter Verarbeitbarkeit und möglichst hoher Kerbschlagzähigkeit zu erhalten.

Es wurde jetzt gefunden, daß man PPE bzw. PPE-haltige Formmassen verbesserter Farbqualität erhält, wenn man dem PPE, das vorzugsweise als organische PPE-Lösung vorliegt, Styrol-und/oder ein Styrolderivat in Mengen von 0,5 bis 5 %, bezogen auf das PPE, zusetzt und anschließend das Gemisch in üblicher Weise weiterbehandelt. Gleichzeitig wird eine Stabilisierung der Molmasse des PPE gegenüber thermisch bedingtem Aufbau erzielt. Sowohl das reine PPE als auch besonders Mischungen mit Schlagzähmodifiziermitteln, wie z. B. Polyoctenylenen, weisen nachweislich verbesserte Kerbschlagzähigkeitswerte auf.

Die Wirkung des Styrolzusatzes beruht vermutlich darauf, daß sich Styrol mit den chinoiden Strukturen der Nebenbestandteile umsetzt. Im Falle von Styrol und Diphenochinon wurde die stereospezifische Bildung des folgenden Addukts nachgewiesen:

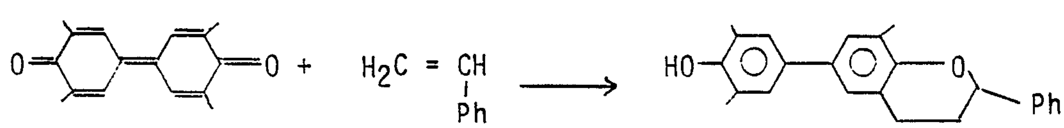

Es ist bemerkenswert, daß bei diesen Reaktionsbedingungen die Bildung des isomeren Addukts

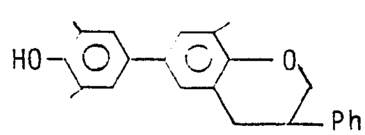

nicht beobachtet wird.

Überschüssiges Styrol, welches sich nicht umgesetzt hat, stört nicht. Ein großer Teil wird ohnehin zusammen mit dem Lösemittel bei der Aufarbeitung entfernt. Die Anwesenheit geringer Mengen von polymerisiertem Styrol stellt schon deshalb keinen Nachteil dar, da die üblichen PPE-haltigen Formmassen ohnehin Polystyrol enthalten.

Günstig ist auch, daß durch Zugabe des flüssigen Styrols oder Styrolderivats zu der PPE-Lösung unmittelbar eine homogene Durchmischung erreicht wird.

Verfahren zu oxidativen Kupplungsreaktion von Phenolen sind dem Fachmann bekannt. Geeignete Phenole weisen die Formel

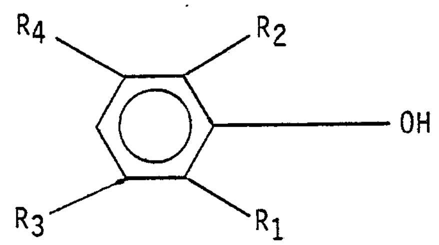

mit $R_3$, $R_4$ = H, $CH_3$ auf,

wobei $R_1$ und $R_2$ entweder die Bedeutung von n-oder i-Alkylresten mit 1 bis 6 C-Atomen haben oder $R_1$ für Wasserstoff und $R_2$ für einen tertiären Alkylrest mit 4 bis 6 C-Atomen steht (vgl. deutsche Patentanmeldung P 36 17 18.7 "Verfahren zur Herstellung von Polyphenylenethern", DE-OS 32 24 692 und DE-OS 32 24 691 und dort zitierte Literatur). Insbesondere wird 2,6-Dimethylphenol eingesetzt. Vorzugsweise wird die Reaktion in Gegenwart eines Kupferaminkatalysators und gegebenenfalls eines Aktivators durchgeführt.

Es gibt verschiedene Möglichkeiten, die oxidative Kupplungsreaktion abzustoppen und das Polymere von Verunreinigungen zu reinigen (vgl. beispielsweise DE-OSS 33 32 377, 34 19 601 und 34 42 141).

Üblicherweise wird der Katalysatorkomplex durch Zusatz einer wäßrigen Säure, wie z. B. verdünnter Essigsäure oder Kohlensäure und Wasser, inaktiviert. Es bilden sich nach Zugabe dieser Reagentien zwei Phasen aus, von denen die obere Phase das PPE und die Verunreinigungen enthält.

Man erhält nach Abstoppung und Aufarbeitung eine organische Lösung von etwa 5 bis 25 Gewichtsprozent PPE.

Übliche organische Lösemittel, in denen das PPE anfällt, umfassen insbesondere aromatische Kohlenwasserstoffe wie z. B. Toluol oder Xylol, sowie deren Gemische mit niedrigen Alkoholen oder chlorierte Kohlenwasserstoffe wie Chloroform etc.

Geeignete styrolische Verbindungen werden am besten durch die Formel

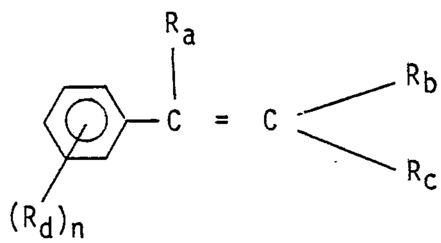

beschrieben. Hierbei stehen $R_a$ , $R_b$ und $R_c$ unabhängig voneinander für Wasserstoff oder einen Methyl-, Ethyl-, n-oder i-Propylrest mit der Einschränkung, daß die Summe der Zahl der C-Atome der drei Reste $R_a$ , $R_b$ und $R_c$ 3 nicht überschreiten darf. Vorzugsweise haben $R_b$ und $R_c$ die Bedeutung von Wasserstoff und $R_a$ steht ebenfalls für Wasserstoff oder den Methylrest. n hat die Bedeutung von 3, 2, 1 oder vorzugsweise 0. $R_d$ steht für einen Alkylrest mit 1 bis 6 C-Atomen, ein Halogen wie z. B. Chlor oder Brom, einen Cyanid- oder Aminorest, die Carboxylgruppe oder einen gegebenenfalls alkylsubstituierten Arylrest. Ist n gleich oder größer als 2, so kann $R_d$ auch für unterschiedliche $R_d$-Reste stehen.

Die Gesamtmenge des Styrols und/oder des Styrolderivates liegt, bezogen auf das vorliegende PPE, bei 0,5 bis 5 Gew.-%.

Vorzugsweise wird eine organische PPE-Lösung mit dem Styrol(derivat) behandelt. Die Weiterbehandlung nach dem Verfahren der Direktisolation erfordert die Anwendung erhöhter Temperaturen, um das PPE vom Lösemittel zu befreien. Ein Verfahren zur Aufkonzentrierung von PPE-Lösungen wird in der deutschen Patentanmeldung P 36 00 754.4 vom 14.01.1986 beschrieben. Die Styrolzugabe muß bei dem vorliegenden Verfahren in jedem Falle erfolgen, bevor das PPE über 150 °C, vorzugsweise über 100 °C, erhitzt wird.

Es ist üblich, geringe Restmengen von Lösemitteln in einem Extruder zu entfernen, wobei die Temperaturen auf 240 °C und mehr steigen können. In der Praxis wird meist nicht reines PPE isoliert. Vielmehr setzt man entweder der verdünnten oder konzentrierten PPE-Lösung oder der PPE-Schmelze Polystyrol zur Verbesserung der Fließfähigkeit zu (vgl. DE-OS 33 37 629 und deutsche Patentanmeldung P 36 03 798). Es ist auch möglich, dem PPE andere Polymere wie z. B. Polyolefine, Polyamide, schlagzäh modifizierte Styrolpolymerisate zuzusetzen, wie dies aus der Literatur bekannt ist.

Gemäß dem Verfahren der Erfindung erhält man Produkte, die sich einerseits besser verarbeiten lassen, da sie fließfähiger sind, und bessere mechanische Eigenschaften z. B. höhere Kerbschlagzähigkeit aufweisen und die andererseits weniger gefärbt sind als Vergleichsprodukte, die nicht gemäß diesem Verfahren behandelt wurden.

Beispiel 1

Eine Lösung von 1,5 g $CuCl_2 \bullet H_2O$ in 20 g Methanol in einem 3 l-Reaktor wird unter Rühren (750 U/min) und unter Durchleiten von Stickstoff (100 l/h) mit einer Mischung aus 1300 g Toluol, 177 g Methanol, 30 g Morpholin und 1,5 g N,N'-Di-tert.-butylethylendiamin bei 30 °C vereinigt. Nach 5 Minuten ersetzt man die Stickstoff-Zufuhr durch einen Luftstrom von 100 l/h und tropft über einen Zeitraum von 30 Minuten eine Lösung aus 150 g 2,6-Dimethylphenol in 150 g Toluol zu. Nach 55 Minuten reduziert man den Luftstrom auf 40 l/h. 15 Minuten später stoppt man die Polykondensation, indem man die Luftzufuhr beendet. Nach der Zugabe von 425 ml Wasser leitet man $CO_2$ (200 l/h) ein, bis die exotherme Reaktion abgeklungen ist. Anschließend trennt man die Phasen, setzt der organischen Phase 5 g Styrol hinzu, extrahiert die organische Phase zweimal mit 70 °C heißem Wasser, isoliert die organische Phase und erhöht die Feststoffkonzentration durch Destillation bei Normaldruck auf 50 Gew.-%. Zur Überprüfung der Stabilisierungswirkung gegen thermische Einflüsse werden die abgekühlten, erstarrten Massen in einem Edelstahlautoklaven 30 Minuten auf 300 °C erhitzt. Nach dem Erkalten wird in üblicher Weise der J-Wert des PPE bestimmt und die Farbe einer 5 %igen PPE-Lösung in Chloroform vergleichend beurteilt (Tab. 1).

Beispiel 2

Man geht analog wie in Beispiel 1 vor; jedoch erfolgt die Zugabe des Styrols erst, nachdem die Feststoffkonzentration der Lösung einen Wert von 50 Gewichtsprozent erreicht hat.

Vergleichsbeispiel A

Man geht analog wie in Beispiel 1 vor; jedoch entfällt die Zugabe des Styrols.

Tabelle 1:

| Beispiel Nr. | J-Wert ($cm^3/g$) nach Polykondensation | J-Wert ($cm^3/g$) nach Erhitzen auf 300 °C | Farbe |
|---|---|---|---|
| 1 | 57 | 59 | hell |
| 2 | 54 | 56 | hell |
| A | 56 | 72 | dunkel |

Beispiel 3 und Vergleichsversuch B

Nach grundsätzlich gleichem Verfahren, wie in Beispiel 1 beschrieben, wurden im größeren Maßstab Ansätze mit 500 kg PPE hergestellt und der organischen Lösung von PPE in Toluol nach der Extraktion mit Wasser 15 kg Styrol zugesetzt. Die Lösung wurde nach dem Aufkonzentrieren auf 50 % Feststoffgehalt nach dem Direktisolationsverfahren gemäß der Patentanmeldung P 36 03 798.2 zum 100 %igen PPE aufgearbeitet. Beurteilt wurden Farbe, Lösungsviskosität (J-Wert), Schmelzviskosität (als Schmelzindex = MFI-Wert) und Kerbschlagzähigkeit.

Tabelle 2:

| Beispiel Nr. | J-Wert ($cm^3/g$) nach Polykondensation | J-Wert ($cm^3/g$) nach Aufarbeitung zum PPE | MFI ($\frac{g}{10\ min}$) 300 °C/211 N | Kerbschlagzähigkeit DIN 53 453 $kJ/m^2$ | Farbe |
|---|---|---|---|---|---|
| 3 | 55 | 58 | 20 | 4,8 | hellbraun |
| B | 55 | 71 | 6 | 3,9 | dunkelbraun |

Beispiel 4 und Vergleichsversuch C

Diese Beispiele entsprechen den Beispielen 3 und B bis auf den Unterschied, daß der PPE-Schmelze gemäß P 36 03 798.2 noch 10 %, bezogen auf PPE, Polyoctenylen zugemischt wird.

Tabelle 3:

| Beispiel Nr. | J-Wert ($cm^3/g$) nach Polykondensation | MFI (g/10 min) nach DIN 53 735 300 °C/211 N | Kerbschlagzähigkeit DIN 53 453 $kJ/m^2$ | Farbe |
|---|---|---|---|---|
| 4 | 55 | 16 | 31 | beige |
| C | 55 | 6 | 23 | braun |

**Ansprüche**

1.Verfahren zur Herstellung von Polyphenylenethern (PPE) bzw. PPE-haltigen Formmassen mit verbesserter Farbqualität, Entfernung des Lösemittels und gegebenenfalls Zugabe der weiteren Komponenten dadurch gekennzeichnet,
daß man dem PPE vor dem Erhitzen auf eine Temperatur über 150 °C in Mengen von 0,5 bis 5 Gewichtsprozent, bezogen auf das vorliegende PPE, eine styrolische Verbindung der Formel

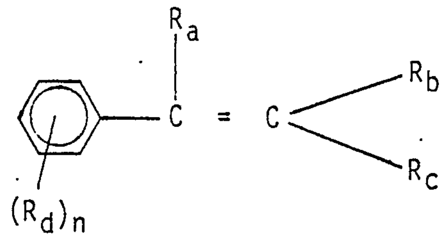

zusetzt,
wobei $R_a$ , $R_b$ und $R_c$ unabhängig voneinander für Wasserstoff oder einen C(1-3)-Alkylrest unter der Bedingung stehen, daß die Summe der Kohlenstoffe der Substituenten $R_a$, $R_b$ und $R_c$ die Zahl 3 nicht überschreiten darf, n die Bedeutung von 0, 1, 2 oder 3 hat und $R_d$für gleiche oder verschiedene Reste aus der Gruppe C(1-6)-Alkyl, CN, Halogen, $NH_2$, COOH, oder gegebenenfalls substituierter Arylrest steht, und anschließend die PPE-Lösung in üblicher Weise weiterbehandelt.

2.Verfahren nach Anspruch 1,
dadurch gekennzeichnet,
daß man eine styrolische Verbindung mit $R_b$ = $R_c$ = H, n = 0 oder 1, $R_d$ = H und $R_a$ = H oder $CH_3$ einsetzt.

3.Verfahren nach den Anprüchen 1 und 2,
dadurch gekennzeichnet,
daß man den Polyphenylenether nach dem Verfahren der Direktisolation herstellt.